# EUROPEAN PATENT SPECIFICATION

(11) **EP 1 799 042 B1**
(45) Date of publication and mention of the grant of the patent: **27.10.2010**
(21) Application number: 05779864.7
(22) Date of filing: 29.08.2005
(51) Int. Cl.: A23B 4/20, A23L 3/3463, A23L 3/3508

(54) **THE COMBINED USE OF GLYCINE AND/OR GLYCINE DERIVATES AND/OR (DI)ACETATE AS ANTIBACTERIAL AGENT AGAINST LISTERIA IN FOODS AND/OR DRINKS**
KOMBINATIONSVERWENDUNG VON GLYZIN UND/ODER GLYZINDERIVATEN UND/ODER (DI)ACETAT ALS ANTIBAKTERIELLES MITTEL GEGEN LISTERIEN IN NAHRUNGSMITTELN UND/ODER GETRÄNKEN
UTILISATION DE GLYCINE ET/OU DERIVÉS DE GLYCINE COMME AGENT ANTIBACTÉRIEN DANS LES PRODUITS ALIMENTAIRES ET/OU BOISSONS

(30) Priority: 27.08.2004 EP 04104118
(43) Date of publication of application: 27.06.2007
(73) Proprietor: PURAC Biochem BV, 4206 AC Gorinchem (NL)
(72) Inventor: BONTENBAL, Edwin, Elize, Willem, NL-6701 CE Wageningen (NL); DE VEGT, Bert, Theo, NL-3052 HC Rotterdam (NL)
(74) Representative: Beetz, Tom
(86) International application number: PCT/EP2005/054240
(87) International publication number: WO 2006/021589

(56) References cited:
- EP-A- 1 192 867
- WO-A-03/063619
- PATENT ABSTRACTS OF JAPAN vol. 2000, no. 11, 3 January 2001 (2001-01-03) -& JP 2000 224976 A (SHINKOO GIJUTSU KAIHATSU CENTER:KK; KIMURA KAZUTAKA), 15 August 2000 (2000-08-15) cited in the application
- PATENT ABSTRACTS OF JAPAN vol. 1996, no. 10, 31 October 1996 (1996-10-31) -& JP 08 154640 A (NIPPON OIL & FATS CO LTD), 18 June 1996 (1996-06-18) cited in the application
- PATENT ABSTRACTS OF JAPAN vol. 2000, no. 26, 1 July 2002 (2002-07-01) -& JP 2001 245644 A (PRIMA MEAT PACKERS LTD), 11 September 2001 (2001-09-11) cited in the application
- PATENT ABSTRACTS OF JAPAN vol. 016, no. 118 (C-0922), 25 March 1992 (1992-03-25) -& JP 03 290174 A (TOYO SEIKAN KAISHA LTD), 19 December 1991 (1991-12-19) cited in the application

## Description

This invention relates to the use of an antibacterial agent combination against Listeria bacteria, and in particular against *Listeria monocytogenes* in foods and drinks. Said antibacterial agent is in particular applied in refrigerated foods and drinks and more in particular in fresh or cooked meat (including poultry and fish) products.

Conventionally, bacterial growth in food and drink applications is controlled and/or prevented by means of pH regulation, water activity control, refrigeration, addition of quality preserving agents as e.g. nitrite and/or using various processing techniques as for example heat treatment, irradiation or high-pressure treatment. However, when controlling *Listeria* the above-described measures are often either insufficient, undesirable or not suitable for the type of food or drink product.

Listeria bacteria often end up in food and drink products due to contamination. Listeria is commonly present and it can grow at low temperatures. It is relatively insensitive to refrigeration temperatures. It is thus very difficult to prevent contamination of products and in particular of meat products. Further, *Listeria* is relatively insensitive to nitrite and pH regulation. The optimal pH for growth of *Listeria* is about 6, which is about the common pH in fresh or cooked meat. Further pH reduction would negatively affect the taste and texture of said meat products.

Accordingly, the preservation from *Listeria* of protein-containing food products, pH sensitive food products and refrigerated food products such as drinks and dairy products, salads and other vegetable products, dried foods and convenient foods as e.g. ready-to-eat meals, and especially meat (= including fish and poultry) products still proves to be a problem. It is known that one of the most important causes of food poisoning is contamination due to incorrect handling of food and drink products.
The invention provides a solution to the above-mentioned problems in preservation of foods and drinks against *Listeria.*

Various publications exist which describe the antibacterial effect of glycine against food spoilage: JP2000-224976 describes a preservative for food using calcium lactate and glycine in combination with organic acid salts such as e.g. citric acid, acetic acid or gluconic acid. Further, the publication describes that said preservative has effect against microorganisms such as lactic acid bacteria.

JP2001-245644 describes a method of improving a preservable period of a processed food such as processed meats or edible daily dishes by using at least a lactic acid salt and an acetic acid salt. Glycine may be added as necessary. The publication describes that said method is capable of suppressing the growth of microorganisms associated with putrefaction or deterioration.

UK 1510942 describes the concurrent use of maltose and glycine to prevent putrefaction in foodstuffs such as Japanese-style confectionaries, jams, jellies, chilled-served desserts, dairy products and fruit preserves. One test is described wherein said combination of maltose and glycine is tested against putrefaction of a beef extract medium by Bacillus bacteria.

US 2711976 describes that glycine can be used against food spoilage by "heat resistant indigenous or natural flora which survive the usual cooking or heat treating operation" and further against food poisoning outbreaks by enterotoxigenic microorganisms such as *Micrococcus pyogenes* or more commonly referred to as *Staphylococcus.*

Some publications were found which describe the antibacterial effect of glycine, but its is not clear from the publication which bacteria were fought:
JP 08-154640 A discloses the use of an antimicrobial agent in foods to improve preservation wherein said agent contains 1-30 wt% acetic acid, with preferably 1-30 wt% of glycine and preferably 0.05-1 wt% of baked calcium. Gyoza (meat dumplings) and Harumaki (egg dough wrapped around minced vegetables, meat etc. in a small roll and fried in deep fat) are disclosed as food applications in which said antibacterial agent is used. The publication does not refer to specific bacteria against which said agent is effective.
JP 03 290174 A describes incorporating an unheated or low-temperature heat-treated food with glycine and further an organic acid such as acetic acid, adjusted to pH 5.5. or less and that is consequently put into a container to be subjected to high-pressure treatment by an aqueous pressure medium for sterilisation. The publication does not refer to food pathogenic bacteria against which glycine is effective. The publication does not refer to specific food and/or drink applications in which glycine is tested.

Another publication describes the use of glycine against molds and yeast and coliform: International Food Information, XP002315132, Hozova et al., "Prolonging the storage life of foods by non-traditional preservation methods", Slovak. Inst. Of Tech., Czechoslovakia, 1989; This article describes the effect of glycine on prolonging the storage life of preserved products. Pork goulash was used as test product. All samples were processed by heat-treatment. The results show that addition of glycine has an effect on the growth of moulds and yeasts that are present in raw pork that has subsequently been heat-treated and pasteurised. The part of the microorganisms involving coliform microorganisms and arerobic spore-forming microorganisms is not significantly influenced by the presence of glycine.

Document WO 03063619 discloses the use of an antimicrobial composition comprising lactate, against Listeria monocytogenes.

The present invention is directed to the use of an antibacterial agent combination against *Listeria,* more preferably against *Listeria monocytogenes,* in foods and/or drinks wherein the antibacterial agent combination comprises:
- glycine and/or glycine derivative, and
- lactate and/or (di)acetate salt.

We have found that with the antibacterial agent combination according to the invention Listeria can effectively be controlled. While the sole use of glycine has proven to be uneffective against *Listeria* and the sole use of lactate and or (di)acetate also fails to give the desired effect, the present combination gives the desired effect.
Suitable lactate salts are potassium and sodium lactate. Suitable (di) acetate salts are potassium and sodium (di)acetate.

With glycine derivative is meant any compound which comprises glycine or glycinate. Examples of suitable glycine derivatives are (earth) alkali salts of glycine, ammonium glycinate, di- and tripeptides comprising glycine and esters of glycine and C1-C8 alcohols. With esters of glycine and C1-C8 alcohols is meant: esters of glycine and alcohols containing 1 up to 8 carbon atoms. Said carbon atom chains may be branched or straight. Examples of alkali glycinates are sodium glycinate and potassium glycinate; examples of earth alkali glycinates are magnesium glycinate and calcium glycinate; examples of glycinate esters of C1-C8 alcohols are methyl glycinate, ethyl glycinate, buthyl glycinate and hexyl glycinate.

The antibacterial agent combination according to the invention may suitably be used as the sole antibacterial agent in food and/or drink products.

The antibacterial agent combination according to the invention may very well be applied as antibacterial agent against *Listeria* in non-refrigerated products as for example soups, noodles, creams and some sausages and (powdered) dried products.

We have found further that the antibacterial agent combination according to the invention can suitably be used in refrigerated food and drink products. Refrigerated food and drink products are considered those food and drink products which require being kept at lowered temperature to increase the microbial stability before (preparation for) consumption. This is usually at a temperature between 4 and 7 °C with occasional peaks to 12 °C. The use of the antibacterial agent combination according to the invention has specific advantages in refrigerated products, because listeria bacteria are known to be relatively insensitive to refrigeration. Examples of such refrigerated products are meat products (cured and/or uncured, fresh and/or cooked), salads and other vegetable products, drinks and dairy products, semi-processed foods, convenient foods as e.g. ready-to-eat meals and dried food products.

The antibacterial agent combination according to the invention is found to be very effective as antibacterial agent in meat applications including fish and poultry, both cured and uncured meat and fresh meat. The antibacterial agent combination according to the invention is found to be effective against said Listeria bacteria without loss of taste and without loss of texture.

Examples of fresh meat are beef, beef steak, beef oxtails, neckbones, short ribs, beef roasts, stew meat, beef briskets, pork, pork chops, pork steaks, cutlets, pork roasts, lamb, veal, game goat, filet américain, steak tartar, sushi, or carpaccio, chicken, turkey, duck and other poultry. Some of these fresh meat applications are to be consumed raw, while others are consumed after application of only partial heat treatment, intentionally applied as e.g. for medium cooked steak or unintentionally applied due to improper preparation or improper handling of the food products. The use of the antibacterial agent combination according to the invention ensures food safety even in the case of partial heat-treatment.

Glycine concentrations of 0.5 to 3 wt% based on total weight of product were found to be effective as antibacterial agent for Listeria bacteria and glycine concentrations of 0.5 to 1.5 wt% based on total weight of product were found to be suited in ensuring taste of the product.

Tests showed that a concentration of about 1 to 1.5 wt% of glycine based on total weight of product starts to affect the taste of said product. In said product no auxiliary antibacterial agents and no other taste affecting ingredients were present. A glycine concentration above 1.5 wt% based on total weight of the product gives the product a sweet taste. Dependent on the type of product this sweet taste is acceptable or not. In sweet drinks for example the sweetening effect of glycine is not considered a problem. Accordingly the maximally acceptable glycine concentration in terms of not negatively affecting taste can be increased to concentrations above 1.5 wt% glycine based on total weight of the product. Further, dependent on the presence of other taste affecting ingredients in the product as for example masking agents, the maximum concentration of glycine and/or (earth)alkali glycinate salts, ammonium glycinate and/or esters of glycine and C1-C8 alcohols can also be increased up to a point at which the taste starts to be negatively affected by the presence of glycine and/or said glycine derivative.

It was found that lactic acid and/or ( di) acetate may be present in concentrations of 0.2 to 3 wt% by weight based on said foods and drinks.

In some cases it is advantageous to combine the use of the antibacterial agent combination according to the invention with one or more of the earlier mentioned processing techniques for preservation as e.g. heat treatment, irradiation and/or high-pressure treatment.

The present invention is further illustrated by the following examples, which are not to be construed as being limitative.

### EXAMPLES

### Example 1

Batches of completely cooked sausage without nitrite were prepared according methods known to the person skilled in the art. The basic composition of the cooked sausage consisted of 7% beef (10% fat), 10.2% pork (8% fat), 69% bacon (40% fat), 9.00% water/ice (-2 degrees Celsius), 2.0 % sodium chloride salt, 0.35% spices, 0.35% phosphate, 0.05% sodium ascorbate, 0.05% sodium glutamate and 2.00% wheat starch (percentages all by weight of total product). After addition of the above-mentioned ingredients except for the starch, the sausage was homogenised for several minutes and divided in several portions. The starch was added together with the following additives to different portions of sausage:
- 1.8% potassium lactate (by weight of total product)
- 1.8% potassium lactate + 0.5% glycine (both by weight of total product)
- 1.68% potassium lactate + 0.12% sodium di-acetate + 0.5% glycine (all by weight of total product)

The cooked sausage portions were inoculated with *Listeria monocytogenes,* type 4a (ATCC 19114). The sausage was placed in the bowl of a disinfected laboratory cutter (Scharf ®), cut into small pieces and inoculated with a suspension of mentioned bacteria to a final level of about 10³ per g product each. After inoculation, the sausages were minced and homogenised for 2 minutes. Subsequently the minced product was divided into portions of 40 g and vacuum packaged in plastic pouches with an oxygen permeability of less than 5.0x10⁻¹¹ m³.m⁻².Pa⁻¹.day⁻¹ at 20 degrees Celsius. The packages obtained were stored at 12 degrees Celsius for up to 12 days. During the experiment the temperatures were registered using a Temptimem® data logger.

At appropriate time intervals, samples of minced cooked sausage were taken in duplicate for microbiological analyses. From each single package a sample of 20 g was taken aseptically, diluted 10-fold in physiological peptone saline (PPS) and homogenised in a stomacher for 1 minute. Additional serial dilutions were made in PPS. Numbers of Listeria were determined using Palcam agar (Oxoid® CM877 and SR150). Plates were incubated at 37 degrees Celsius for 2 days.
TABLE I shows the results (in duplicate) of the microbiological analyses of vacuum packed cooked sausage inoculated with *Listeria monocytogenes* and with glycine added in combination with salts of lactic acid and acetic acid during storage at 12 degrees Celsius. TABLE I: Results of *Listeria* count on vacuum packed cooked sausages with different additives during storage at 12 degrees Celsius.

| Additive | Bacterial counts in log cfu per g of product after storage during | | | | |
|---|---|---|---|---|---|
| | 0 days | 3 days | 5 days | 7 days | 12 days |
| Control (no additive) | 2.80 | 5.09 | 7.04 | 8.52 | 8.88 |
| | 2.72 | 4.98 | 7.03 | 8.72 | 8.74 |
| 1.8 wt% Potassium lactate | 2.71 | 2.78 | 2.95 | 4.01 | 5.95 |
| | 2.70 | 2.70 | 2.92 | 4.20 | 5.98 |
| 1.8 wt% potassium lactate + 0.5 wt% glycine | 2.70 | 2.77 | 2.75 | 2.20 | 2.58 |
| | 2.83 | 2.66 | 2.65 | 2.26 | 2.66 |
| 1.69 wt% potassium lactate + 0.12 wt% sodium di-acetate + 0.5 wt% glycine | 2.66 | 2.59 | 2.67 | 1.48 | 1.00 |
| | 2.63 | 2.70 | 2.72 | 2.08 | 1.70 |

The results show that glycine used in combination with lactate and/or (di)acetate has an antibacterial effect..

### Example 2

Batches consisting of three cooked sausages, circa 500 g each, were prepared.
The basic composition of the cooked sausage is given below:
Basic composition cooked sausage

| Ingredient | % |
|---|---|
| Beef (20% fat) | 7.00 |
| Lean Pork (8% fat) | 10.20 |
| Bacon (30% fat) | 69.00 |
| Water/ice | 9.00 |
| Colorozo (salt with 0.6% nitrite) | 2.00 |
| Spices | 0.35 |
| Sodium tri-poly phosphate | 0.35 |
| Sodium ascorbate | 0.05 |
| Sodium glutamate | 0.05 |
| Wheat starch | 2.00 |

Each cooked sausage was inoculated with a cocktail of three types of *Listeria monocytogenes*: type 1/2a (ATCC 35152), type 4a (ATCC 19114) and type 4b (ATCC13932). Before inoculation the cultures, kept on slants, were pre-cultivated twice in Brain Heart Infusion broth (BHI, Oxoid® CM225) for 24 hours at 30°C. The full grown cultures were diluted in physiological peptone saline (PPS) to obtain a mixture at the desired level.

Two sausages (ca. 1000 g) of each composition were placed in the bowl of a disinfected laboratory cutter (Scharf®), cut into small pieces and inoculated with 10 ml of a suspension of mentioned bacteria to a final level of about 10² per g product. After inoculation, the sausages were minced and homogenised for 2 minutes. Subsequently, the minced product was divided into 20 portions of 40 g and vacuum packaged in plastic pouches with an oxygen permeability of less than 5.0 x 10⁻¹¹ m³. m⁻². Pa⁻¹. day⁻¹ at 20°C. The packages obtained were stored at 4°C for up to 60 days. During the experiment the temperatures were registered using a data logger.

At appropriate time intervals, samples of minced cooked sausage of each batch were taken in duplicate for microbiological analyses. From each single package a sample of 20 g was taken aseptically, diluted 10-fold in PPS and homogenised in a stomacher for 1 minute. Additional serial dilutions were made in PPS. Numbers of *L. monocytogenes* were determined using Palcam agar (Oxoid® CM877 and SR150) as mentioned in ISO 11290-2: 1998. Plates were incubated at 37°C for 2 days.

The results of the microbiological analyses of the cooked sausages with different additives during vacuum packed storage at 4°C are given in Table II.

**TABLE II Results of L. monocytogenes counts on vacuum packed cooked sausages with different additives during storage at 4°C**

| Additive | Bacterial counts in log cfu per g of product after storage during | | | | | | |
|---|---|---|---|---|---|---|---|
| | 0 days | 7 days | 12 days | 18 days | 27 days | 41 days | 60 days |
| Control (no additive) | 2.32 | 2.34 | 2.78 | 3.52 4 | .51 | 6.74 | 8.81 |
| | 2.20 | 2.49 | 2.77 | 3.69 | 4.77 | 6.53 | 8.72 |
| 0.5wt% glycine | 2.36 | 2.45 | 2.52 | 3.10 | 4.20 | 6.40 | 8.15 |
| | 2.28 | 2.43 | 2.63 | 2.98 | 4.36 | 6.45 | 8.15 |
| 0.1 wt% glycine | 2.41 | 2.36 | 2.45 | 3.52 | 3.86 | 5.94 | 8.09 |
| | 2.40 | 2.15 | 2.15 | 3.73 | 3.94 | 5.88 | 7.66 |
| 1.04 wt% sodium lactate | 2.34 | 2.08 | 2.32 | 2.41 | 2.41 | 2.87 | 3.49 |
| | 2.38 | 2.20 | 2.11 | 2.30 | 2.04 | 2.41 | 3.38 |
| 1.04 wt% sodium lactate + 0.5 wt% glycine | 2.18 | 1.85 | 2.40 | 2.23 | 2.45 | 2.65 | 5.33 |
| | 2.41 | 2.18 | 2.18 | 2.40 | (4.04) | 2.68 | 4.99 |
| 1.04 wt% sodium lactate + 1.0 wt% glycine | 2.08 | 2.04 | 2.26 | 2.83 | 2.36 | 3.36 | 4.49 |
| | 1.85 | 1.30 | 2.26 | 2.38 | 2.15 | 2.96 | 5.05 |

These experiments show that the sole addition of glycine does not inhibit Listeria growth while the combined addition of glycine and lactate and/or (di) actetate does.

### Example 3

Batches consisting of three cooked sausages, circa 500 g each, were prepared. The basic composition of the cooked sausage is given below

### Basic composition cooked sausage

| Ingredient | % |
|---|---|
| Beef (10% fat) | 7.00 |
| Pork (8% fat) | 10.20 |
| Bacon (40% fat) | 69.00 |
| Water/ice | 9.00 |
| Colorozo | 2.00 |
| Spices | 0.35 |
| Phosphate | 0.35 |
| Sodium ascorbate | 0.05 |
| Sodium glutamate | 0.05 |
| Wheat starch | 2.00 |

The sausages were stored for 1 day at 0°C until further examination.

Each cooked sausage was inoculated with *Listeria monocytogenes,* type 4a (ATCC 19114). Two sausages were placed in the bowl of a disinfected laboratory cutter (Scharf®), cut into small pieces and inoculated with a suspension of mentioned bacteria to a final level of about 10² and 10⁴ per g product respectively. After inoculation, the sausages were minced and homogenised for 2 minutes. Subsequently, the minced product was divided into 20 portions of 40 g and vacuum packaged in plastic pouches with an oxygen permeability of less than 5.0 x 10-11 m3. m-2. Pa-1. day-1 at 20°C. The packages obtained were stored at 7°C for up to 21 days. During the experiment the temperatures were registered using a data logger.

At appropriate time intervals, samples of minced cooked sausage of each batch were taken in duplicate for microbiological analyses. From each single package a sample of 20 g was taken aseptically, diluted 10-fold in physiological peptone saline (PPS) and homogenised in a stomacher for 1 minute. Additional serial dilutions were made in PPS.

Numbers of *L. monocytogenes* were determined using Palcam agar (Oxoid® CM877 and SR150). Plates were incubated at 37°C for 2 days.

The results of the microbiological analyses of the cooked sausages with different additives during vacuum packed storage at 7°C are given in Table III TABLE III Results of *L. monocytogenes* counts on vacuum packed cooked sausages with different additives during storage at 7°C

| Additive | Bacterial counts in log cfu per g of product after storage during | | | | | | |
|---|---|---|---|---|---|---|---|
| | 0 days | 4 days | 7 days | 10 days | 14 days | 17 days | 21 days |
| Control (no additive) | 4,71 | 4,79 | 5,30 | 6,17 | 7,36 | 6,26 | 6,72 |
| | 4,64 | 4,84 | 5,18 | 6,21 | 7,19 | 6,90 | 7,17 |
| 0.5 wt% glycine | 4,53 | 4,78 | 5,28 | 5,75 | 7,18 | 6,91 | 7,21 |
| | 4,49 | 4,73 | 5,12 | 6,12 | 6,86 | 7,00 | 7,01 |
| 1.0 wt% glycine | 4,59 | 4,81 | 4,93 | 5,72 | 6,40 | 6,66 | 7,45 |
| | 4,53 | 4,69 | 4,88 | 5,56 | 6,52 | 6,71 | 7,54 |
| 3.0 wt% potassium lactate | 4,63 | 4,81 | 4,60 | 4,57 | 4,66 | 4,41 | 4,60 |
| | 4,52 | 4,66 | 4,59 | 4,69 | 4,74 | 4,58 | 4,63 |
| 3.0 wt% potassium lactate/sodium diacetate (14:1) | 4,36 | 4,66 | 4,59 | 4,78 | 4,69 | 4,63 | 4,62 |
| | 4,46 | 4,61 | 4,78 | 4,70 | 4,74 | 4,43 | 4,51 |
| 3.0 wt% potassium lactate + 0.5 wt% glycine | 4,56 | 4,58 | 4,69 | 4,68 | 4,49 | 4,51 | 4,74 |
| | 4,60 | 4,54 | 4,62 | 4,72 | 4,57 | 4,32 | 4,65 |
| 3.0 wt% potassium/sodium di-acetate (14:1) + 0.5wt% glycine | 4,45 | 4,43 | 4,67 | 4,62 | 4,40 | 4,51 | 4,61 |
| | 4,54 | 4,73 | 4,41 | 4,72 | 4,56 | 4,56 | 4,56 |

## Claims

1. The use of an antibacterial agent combination against *Listeria,* more preferably against *Listeria monocytogenes,* in foods and/or drinks wherein the antibacterial agent combination comprises:
- glycine and/or glycine derivative, and
- lactate and/or (di)acetate salt.

2. The use of the antibacterial agent combination according to claim 1 wherein the lactate salt is a sodium or potassium lactate.

3. The use of the antibacterial agent combination according to claim 1 wherein the (di) acetate salt is a sodium or potassium (di)acetate.

4. The use of the antibacterial agent combination according to claim 1 wherein the glycine derivative is an (earth)alkali glycinate salt, ammonium glycinate, a di-or tripeptide comprising glycine, an ester of glycine and C1-C8 alcohols.

5. The use of the antibacterial agent combination according to claim 1 wherein the antibacterial agent combination is the sole antibacterial agent in foods and/or drinks.

6. The use of the antibacterial agent combination according to any one of the preceding claims in refrigerated foods and/or refrigerated drinks.

7. The use of the antibacterial agent combination according to any one of the preceding claims 1-5 in meat applications.

8. The use of the antibacterial agent combination according to any one of the preceding claims 1-5 in fresh meat applications

9. The use of the antibacterial agent combination according to any one of the preceding claims wherein glycine and/or glycine derivative is used in concentrations of 0.5 to 3 wt% and preferably 0.5 to 1.5 wt% based on said foods or drinks.

10. The use of the antibacterial agent combination according to any one of the preceding claims wherein lactate and/or (di)acetate salt is used in concentrations of 0.5 to 3 wt% based on said foods or drinks.

## Patentansprüche

1. Die Verwendung einer antibakteriellen Wirkstoffkombination gegen *Listeria,* vorzugsweise gegen *Listeria monocytogenes* in Nahrungsmitteln und/oder Getränken, wobei die antibakterielle Wirkstoffkombination aufweist:
- Glycin und/oder ein Glycinderivat, und
- Laktat- und/oder (Di)acetatsalz.

2. Die Verwendung der antibakteriellen Wirkstoffkombination gemäß Anspruch 1, wobei das Laktatsalz ein Natrium- oder Kaliumlaktat ist.

3. Die Verwendung der antibakteriellen Wirkstoffkombination gemäß Anspruch 1, wobei das (Di)acetatsalz ein Natrium- oder Kalium(di)acetat ist.

4. Die Verwendung der antibakteriellen Wirkstoffkombination gemäß Anspruch 1, wobei das Glycinderivat ein (Erd)alkaliglycinatsalz, Ammoniumglycinat, ein Di- oder Tripeptid aufweisend Glycin, ein Ester von Glycin und C1-C8-Alkohole ist.

5. Die Verwendung der antibakteriellen Wirkstoffkombination gemäß Anspruch 1, wobei die antibakterielle Wirkstoffkombination der einzige antibakterielle Wirkstoff in Nahrungsmitteln und/oder Getränken ist.

6. Die Verwendung der antibakteriellen Wirkstoffkombination gemäß einem der vorhergehenden Ansprüche in gekühlten Nahrungsmitteln und/oder in gekühlten Getränken.

7. Die Verwendung der antibakteriellen Wirkstoffkombination gemäß einem der vorhergehenden Ansprüche 1 bis 5 in Fleischprodukten.

8. Die Verwendung der antibakteriellen Wirkstoffkombination gemäß einem der vorhergehenden Ansprüche 1 bis 5 in Frischfleischprodukten.

9. Die Verwendung der antibakteriellen Wirkstoffkombination gemäß einem der vorhergehenden Ansprüche, wobei Glycin und/oder Glycinderivat in Konzentrationen von 0,5 bis 3 Gew.-% und vorzugsweise 0,5 bis 1,5 Gew.-% basierend auf den Nahrungsmitteln oder Getränken verwendet wird.

10. Die Verwendung der antibakteriellen Wirkstoffkombination gemäß einem der vorhergehenden Ansprüche, wobei Laktat und/oder (Di)acetatsalz in Konzentrationen von 0,5 bis 3 Gew.-% basierend auf den Nahrungsmitteln oder Getränken verwendet wird.

## Revendications

1. Utilisation d'une combinaison d'agents antibactériens contre la *Listeria,* de préférence contre la *Listeria monocytogenes,* dans les aliments et/ou les boissons, dans laquelle la combinaison d'agents antibactériens comprend :
- de la glycine et/ou un dérivé de glycine, et
- un sel de lactate et/ou de (di)acétate.

2. Utilisation de la combinaison d'agents antibactériens selon la revendication 1, dans laquelle le sel de lactate est un lactate de sodium ou de potassium.

3. Utilisation de la combinaison d'agents antibactériens selon la revendication 1, dans laquelle le sel de (di)acétate est un (di)acétate de sodium ou potassium.

4. Utilisation de la combinaison d'agents antibactériens selon la revendication 1, dans laquelle le dérivé de glycine est un sel de glycinate alcalin ou alcalino-terreux, un glycinate d'ammonium, un di- ou tripeptide comprenant de la glycine, un ester de glycine et d'alcools en C1-C8.

5. Utilisation de la combinaison d'agents antibactériens selon la revendication 1, dans laquelle la combinaison d'agents antibactériens est le seul agent antibactérien dans des aliments et/ou des boissons.

6. Utilisation de la combinaison d'agents antibactériens selon l'une quelconque des revendications précédentes, dans des aliments et/ou des boissons réfrigéré(e)s.

7. Utilisation de la combinaison d'agents antibactériens selon l'une quelconque des revendications 1-5 précédentes, dans des applications relatives à la viande.

8. Utilisation de la combinaison d'agents antibactériens selon l'une quelconque des revendications 1-5 précédentes, dans des applications relatives à la viande fraîche.

9. Utilisation de la combinaison d'agents antibactériens, selon l'une quelconque des revendications précédentes, dans laquelle la glycine et/ou le dérivé de glycine est utilisé(e) dans des concentrations de 0,5 à 3 % en poids et de préférence de 0,5 à 1,5 % en poids, sur la base desdits aliments ou des boissons.

10. Utilisation de la combinaison d'agents antibactériens selon l'une quelconque des revendications précédentes, dans laquelle le sel de lactate et/ou de (di)acétate est utilisé dans des concentrations de 0,5 à 3 % en poids, sur la base desdits aliments ou boissons.
